# EUROPEAN PATENT APPLICATION

(11) **EP 2 034 402 A2**
(43) Date of publication of application: **11.03.2009**
(21) Application number: 08164083.1
(22) Date of filing: 10.09.2008
(51) Int. Cl.: G06F 9/445

(54) **Electronic apparatus and program download method**

(30) Priority: 10.09.2007 KR 20070091613
(71) Applicant: Samsung Electronics Co., Ltd., Suwon-si, Gyeonggi-Do (KR)
(72) Inventor: Lee, Hyun-suk, Gyeonggi-do (KR)
(74) Representative: Walaski, Jan Filip

(57) **Abstract**

A method by which an electronic apparatus downloads a program includes receiving program information regarding a utility program from an external apparatus, and determining whether the utility program is executable, and downloading the utility program from the external apparatus if a determination is made that the utility program is executable. Therefore, checking whether a utility program is executable is possible prior to downloading of the utility program. A user may efficiently use the utility program, and user convenience may be enhanced.

## Description

The present invention relates to an electronic apparatus and a program downloading method thereof. More particularly, the present invention relates to an electronic apparatus to determine whether a program, for example a utility program such as a widget, is executable before downloading the utility program, and to download the utility program according to the determination, and a program downloading method thereof.

Electronic apparatuses are fabricated using various types of devices, such as transistors or semiconductors. For example, image forming apparatuses or host devices, such as personal computers (PCs), may be used as electronic apparatuses.

Image forming apparatuses, for example copiers, facsimile machines, printers, multifunction machines or other apparatuses, print data on paper to form images.

The development of wired and wireless networks has made connectivity for host devices to image forming apparatuses possible. Accordingly, most widely-used image forming apparatuses include communication modules so that host devices may share data via an Internet protocol (IP) network.

As described above, apparatuses connected to host devices on wired and wireless networks to print data transmitted from each host device are referred to as network image forming apparatuses.

Recently, programs such as widgets are installed within image forming apparatuses to provide users with a variety of information.

Here, widgets may be fabricated according to the user's intention, and may function as stock market information providers, time information providers, or calculators. Widgets may be launched in devices in which platforms capable of executing widgets are installed.

Accordingly, if a platform capable of executing a widget is not installed in an image forming apparatus, or if the platform is unable to support the downloaded widget even when the platform has been installed in the image forming apparatus, installing and launching the downloaded widget is impossible.

Even after downloading a widget, a user may check whether the downloaded widget can be launched, according to whether the downloaded widget is successfully installed.

Therefore, execution of the downloaded widget is impossible, time required to download the widget may be wasted. Furthermore, if the downloaded widget is bought, not only time but also money may be wasted.

The present invention provides an electronic apparatus to determine whether a utility program, such as a widget, is executable before downloading the utility program, and to download the utility program according to the determination, so that the user may efficiently use utility programs and user convenience may be enhanced, and a program downloading method thereof.

Additional aspects and utilities of the present invention will be set forth in part in the description which follows and, in part, will be obvious from the description, or may be learned by practice of the invention.

The foregoing and/or other aspects and utilities of the present invention may be achieved by providing a method by which an electronic apparatus downloads a program, the method including receiving program information regarding a utility program from an external apparatus, and determining whether the utility program is executable, and downloading the utility program from the external apparatus if a determination is made that the utility program is executable.

The method may further include transmitting the downloaded utility program to an image forming apparatus. The electronic apparatus may be a host device, and the external apparatus may be a web server.

The receiving may include determining whether the utility program is executable in the image forming apparatus.

The receiving may include requesting support information which can be supported by the image forming apparatus, and comparing the program information and the support information received upon request, and determining that the utility program is executable in the image forming apparatus if the program information is identical to the support information.

The method may further include displaying a notification message to provide notification that downloading the utility program is impossible and to provide notification of a reason thereof, if a determination is made that the utility program is non-executable in the image forming apparatus.

The method may further include connecting to the external apparatus and displaying a same display screen as displayed on the external apparatus. The program information may be information regarding the utility program requested through the display screen.

The downloading may include transmitting an Internet protocol (IP) address of the image forming apparatus to the external apparatus, and controlling the external apparatus to transmit the utility program to the IP address of the image forming apparatus, if a determination is made that the utility program is executable.

The electronic apparatus may be an image forming apparatus.

The receiving may include comparing the program information to pre-stored support information, and determining that the utility program is executable if the program information is identical to the pre-stored support information.

The method may further include displaying a notification message to provide notification that downloading the utility program is impossible and to provide notification of a reason thereof, if a determination is made that the utility program is non-executable.

The method may further include connecting to the external apparatus and displaying a same display screen as displayed on the external apparatus. The program information may be information regarding the utility program requested through the display screen.

The foregoing and/or other aspects and utilities of the present invention may also be achieved by providing a host device connected to an image forming apparatus, the host device including a determining unit to receive program information regarding a utility program from an external apparatus, and to determine whether the utility program is executable, and a controller to download the utility program from the external apparatus and to install the downloaded program in the image forming apparatus if a determination is made that the utility program is executable.

The host device may further include a storage unit to store at least one of communication protocol information, application programming interface (API) version information and interpretable programming language information, which are supportable by the image forming apparatus. The determining unit may compare the program information to the stored information, and may determine that the utility program is executable in the image forming apparatus if the program information is identical to the stored information.

The host device may further include a display unit to display a notification message to provide notification that downloading the utility program is impossible and to provide notification of a reason thereof, if a determination is made that the utility program is non-executable.

The host device may further include a display unit connected to the external apparatus to display the same display screen as displayed on the external apparatus, and a communication interface unit to receive information regarding the utility program requested through the display screen from the external apparatus.

The controller may transmit an Internet protocol (IP) address of the image forming apparatus to the external apparatus and control the external apparatus to transmit the utility program to the IP address of the image forming apparatus, if a determination is made that the utility program is executable.

The foregoing and/or other aspects and utilities of the present invention may also be achieved by providing an image forming apparatus including a determining unit to receive program information regarding a utility program from an external apparatus, and determine whether the utility program is executable, and a controller to download the utility program from the external apparatus and to install the downloaded program if a determination is made that the utility program is executable.

The image forming apparatus may further include a storage unit to store at least one of communication protocol information, application programming interface (API) version information and interpretable programming language information, which are supportable by the image forming apparatus. The determining unit may compare the program information to the stored information, and may determine that the utility program is executable in the image forming apparatus if the program information is identical to the stored information.

The image forming apparatus may further include a display unit to display a notification message to provide notification that downloading the utility program is impossible and to provide notification of a reason thereof, if a determination is made that the utility program is non-executable.

The image forming apparatus may further include a display unit connected to the external apparatus to display a same display screen as displayed on the external apparatus, and a communication interface unit to receive information regarding the utility program requested through the display screen from the external apparatus.

The foregoing and/or other aspects and utilities of the invention may also be achieved by providing an image forming apparatus including a determining unit to determine whether a utility program is executable based on program information thereof from an external apparatus so that if a determination is made that the utility program is executable, a controller to download and install the utility program, and if the determination is made that the utility program is non-executable, a display unit to display a notification message to provide notification that the downloading of the utility program is impossible and to provide notification of a reason thereof.

The foregoing and/or other aspects and utilities of the invention may also be achieved by providing a computer-readable recording medium having embodied thereon a computer program to execute a method, wherein the method including determining whether the utility program is executable based on program information thereof from an external apparatus so that if a determination is made that the utility program is executable, downloading and installing the utility program, and if the determination is made that the utility program is non-executable, displaying a notification message to provide notification that the downloading of the utility program is impossible and to provide notification of a reason thereof.

These and/or other aspects and utilities of the present invention will become apparent and more readily appreciated from the following description of the embodiments, taken in conjunction with the accompanying drawings of which:
FIG. 1 is a block diagram illustrating an electronic apparatus according to an exemplary embodiment of the present invention;
FIG. 2 is an exemplary view illustrating a method of downloading a program on a network to which the electronic apparatus illustrated in FIG. 1 is connected;
FIG. 3 is an exemplary view illustrating a message displayed by determining that launching a program is impossible;
FIG. 4 is a flowchart illustrating a method of downloading a program in an electronic apparatus, according to an exemplary embodiment of the present invention;
FIG. 5 is a flowchart illustrating a method of downloading a program in an image forming apparatus, according to another exemplary embodiment of the present invention; and
FIG. 6 is a flowchart illustrating a method of downloading a program in a host device, according to another exemplary embodiment of the present invention.

Reference will now be made in detail to embodiments of the present invention, examples of which are illustrated in the accompanying drawings, wherein like reference numerals refer to the like elements throughout. The embodiments are described below in order to explain the present invention by referring to the figures.

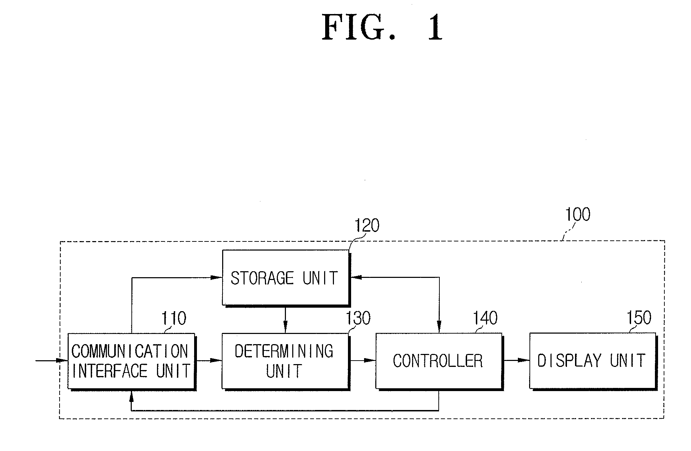

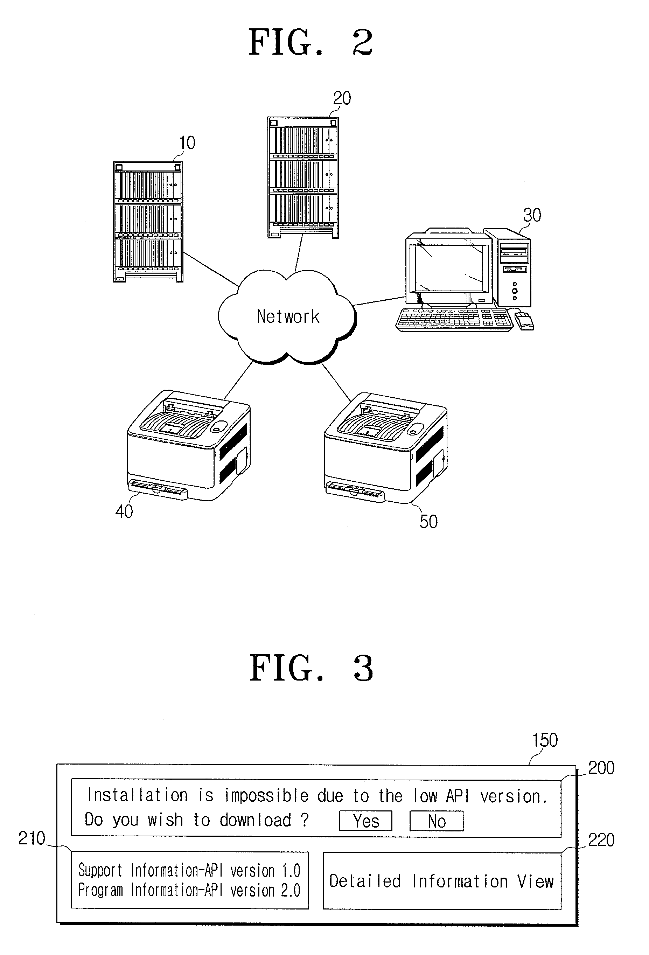

FIG. 1 is a block diagram illustrating an electronic apparatus 100 according to an exemplary embodiment of the present invention. The electronic apparatus 100 of FIG. 1 includes a communication interface unit 110, a storage unit 120, a determining unit 130, a controller 140 and a display unit 150. In the exemplary embodiment of the present invention, the electronic apparatus 100 may be an image forming apparatus or a host device which is connected to an external apparatus via a network, and the external apparatus may be another image forming apparatus, another host device or a web server. In order to facilitate an understanding of the present invention, a description will be given with reference to FIGS. 1 and 2.

FIG. 2 is an exemplary view illustrating a method of downloading a program on a network to which the electronic apparatus 100 illustrated in FIG. 1 is connected. Web servers 10 and 20, a host device 30 and image forming apparatuses 40 and 50 are connected over the network.

The host device 30 and the image forming apparatuses 40 and 50 may include the same units as the electronic apparatus 100 of FIG. 1.

Hereinafter, the image forming apparatus 50 configured in a same manner as the electronic apparatus 100 of FIG. 1 will be described.

Referring to FIGS. 1 and 2, the communication interface unit 110 may be communicably connected to external apparatuses via the network.

In this situation, the external apparatuses may include the web servers 10 and 20 to provide web information, the host device 30 and the image forming apparatus 40. The external apparatuses may be servers to provide programs such as utility programs, and a single server may distribute one or more utility programs.

The utility program may be, for example, a widget, which causes an application program developer or an Internet portal site provider to provide information which a user desires to acquire to suit a user's taste. Hereinafter, the widget may be exemplified as a utility program.

The widget is a compact program which is created by a general user and distributed via the Internet. The widget generally provides information regarding a specific theme, such as weather reports, stock market information, traffic reports or the like.

The widget may be distributed in a text format language, for example Extensible Markup Language (XML), Hypertext Markup Language (HTML), or JavaScript.

If a user request to download the widget is received through the external apparatus, the external apparatus may transmit information regarding the widget to the image forming apparatus 50.

The communication interface unit 110 may receive the information regarding the widget from the external apparatus. In this situation, the user may request to download the widget, directly through the display unit 150 included in the image forming apparatus 50, or indirectly through the host device 30.

The display unit 150 may be implemented as a liquid crystal display (LCD) panel. The display unit 150 may display full status information of the image forming apparatus 50 under control of the controller 140.

The display unit 150 may be connected to one external apparatus selected by the user from among the external apparatuses, that is, among the web servers 10 and 20, the host device 30 and the image forming apparatus 40, and may display the same display screen as displayed on the connected external apparatus. For example, if the display unit 150 is connected to the web servers 10 and 20, a web screen may be displayed on the display unit 150, and if the display unit 150 is connected to the host device 30, the display unit 150 may display the same screen as displayed on the host device 30 by monitoring the host device 30.

If the user directly requests to download the widget through the display unit 150 of the image forming apparatus 50, the image forming apparatus 50 may receive information regarding the requested widget from the connected external apparatus.

If a request to download the widget is received through the host device 30, the host device 30 may transmit an IP address of the image forming apparatus 50 to the external apparatus. The external apparatus may distribute the requested widget, from among the external apparatuses, that is, among the web servers 10 and 20, and image forming apparatus 40 connected to the network, so that the external apparatus may transmit the information regarding the requested widget (hereinafter, referred to as "program information") to the IP address of the image forming apparatus 50.

Here, the program information may be utility programming languages, such as XML, HTML or JavaScript; a communication protocol, such as Hypertext Transfer Protocol (HTTP), File Transfer Protocol (FTP), Simple Object Access Protocol in operation (SOAP); or an application programming interface (API) version.

The storage unit 120 may store data and programs received through the communication interface unit 110, a platform used to perform operations of the image forming apparatus 50 and information regarding the platform.

The information regarding the platform may include information regarding the communication protocol, API version and interpretable programming languages.

If program information on the utility program is received from the external apparatus, the determining unit 130 may compare the received program information to the information regarding the platform (hereinafter, referred to as "support information") pre-stored in the storage unit 120, and may determine whether the received program information is identical to the support information. For example, if the pre-stored API version is lower than that of the requested widget, the determining unit 130 may determine that the received program information differs from the support information.

If a determination is made that the received program information differs from the pre-stored support information, the determining unit 130 may determine that the requested widget is executable, and if not, the determining unit 130 may determine that the requested widget is non-executable.

If a determination is made that the requested widget is executable, the controller 140 may download the requested widget from the external apparatus which distributes the corresponding widget, and may install the downloaded widget.

Alternatively, if a determination is made that the requested widget is non-executable, the controller 140 may control the display unit 150 to display a notification message to provide notification that downloading the widget is impossible and to provide notification of a reason thereof.

FIG. 3 illustrates a message displayed by determining that launching a program is impossible. The notification message of FIG. 3 displayed on the display unit 150 may be divided into a first box 200 to provide notification of a reason that downloading a program is impossible and to ask whether to download a program, a second box 210 to display information indicating that the program information differs from the support information, and a third box 220 to select a detailed information view mode. In this situation, if the third box 220 is selected, the program information regarding the requested widget together with the pre-stored support information may all be displayed so that the user may check the displayed information.

Additionally, if a non-executable widget is downloaded in order to transmit the widget to another medium, the widget stored in the storage unit 120 may be subjected to a test to determine whether the widget is executable, so that the user may delete the non-executable widget. In this situation, the test to determine whether the widget is executable may be performed in the same manner as the operation performed by the determining unit 130.

Hereinafter, the host device 30 configured in the same manner as the electronic apparatus 100 of FIG. 1 will be described. Referring to FIGS. 1 and 2, the host device 30 may display a web screen provided by the web server 10 through the display unit 150. The user may request the utility program through the displayed web screen.

The communication interface unit 110 may request the web server 10 of the utility program selected by the user. Additionally, the communication interface unit 110 may receive program information regarding the selected utility program from the web server 10.

The controller 140 may request the support information supported by the image forming apparatus 50 from the image forming apparatus 50, and may store the support information received upon request in the storage unit 120.

The determining unit 130 may compare the received support information to the program information, and may then determine whether the utility program is executable. In this situation, if the received support information is identical to the program information, the determining unit 130 may determine that the image forming apparatus 50 is able to execute the utility program.

The host device 30 may control the image forming apparatus 50, on which the utility program will be installed, to determine whether the utility program is executable. In this situation, the controller 140 may transmit the received program information to the image forming apparatus 50, and may control the image forming apparatus 50 to determine whether the image forming apparatus is able to execute the utility program.

If a determination is made that the utility program is executable, the controller 140 may download the utility program from the web server 10, and may transmit the downloaded program to the image forming apparatus 50. Alternatively, the controller 140 may transmit an IP address of the image forming apparatus 50 to the web server 10, and may control the web server 10 to transmit the executable utility program to the IP address of the image forming apparatus 50.

If a determination is made that the utility program is non-executable, the controller 140 may display a notification message to provide notification that downloading the widget is impossible and to provide notification of a reason that downloading the widget on the display unit 150 is impossible.

Therefore, the image forming apparatus 50 or the host device 30, namely, the external apparatus connected via the network, may determine whether the utility program is executable, before the utility program is downloaded, and then the user may determine whether to download the utility program.

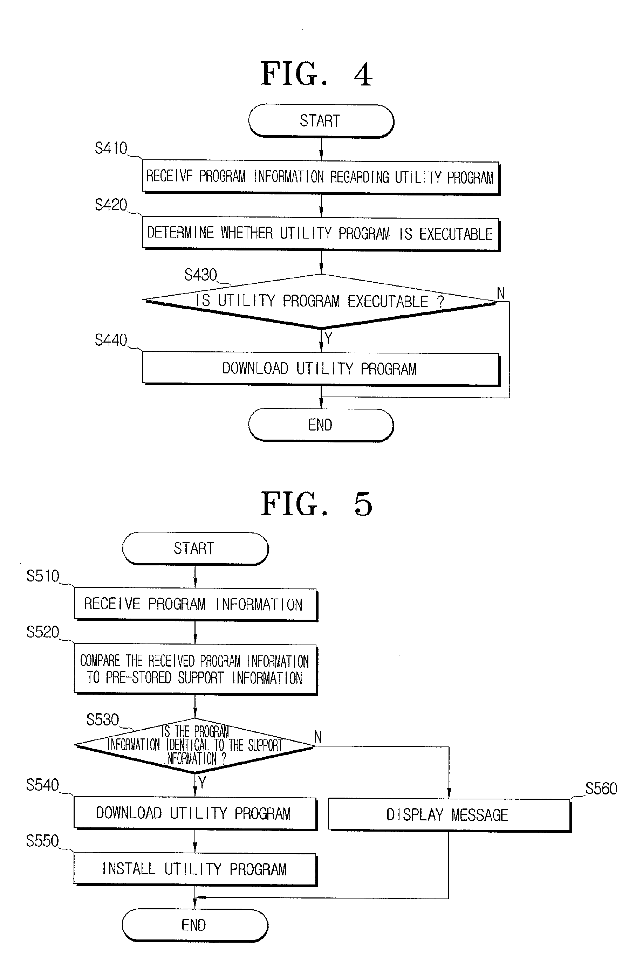

FIG. 4 is a flowchart illustrating a method of downloading a program in an electronic apparatus, according to an exemplary embodiment of the present invention. If the program information regarding the utility program is received from the external apparatus in operation S410, the electronic apparatus on which the utility program will be installed may determine whether the electronic apparatus is able to execute the utility program, that is, whether the utility program is executable in the electronic apparatus, in operation S420.

In operation S420, the received program information may be compared to the support information supported by the electronic apparatus on which the utility program will be installed, so that the electronic apparatus may determine whether the utility program is executable.

If a determination is made that the utility program is executable in operation S430-Y, the electronic apparatus may download the utility program. At this time, if a user attempts to install the utility program in an external electronic apparatus, the utility program may be transmitted to the external electronic apparatus.

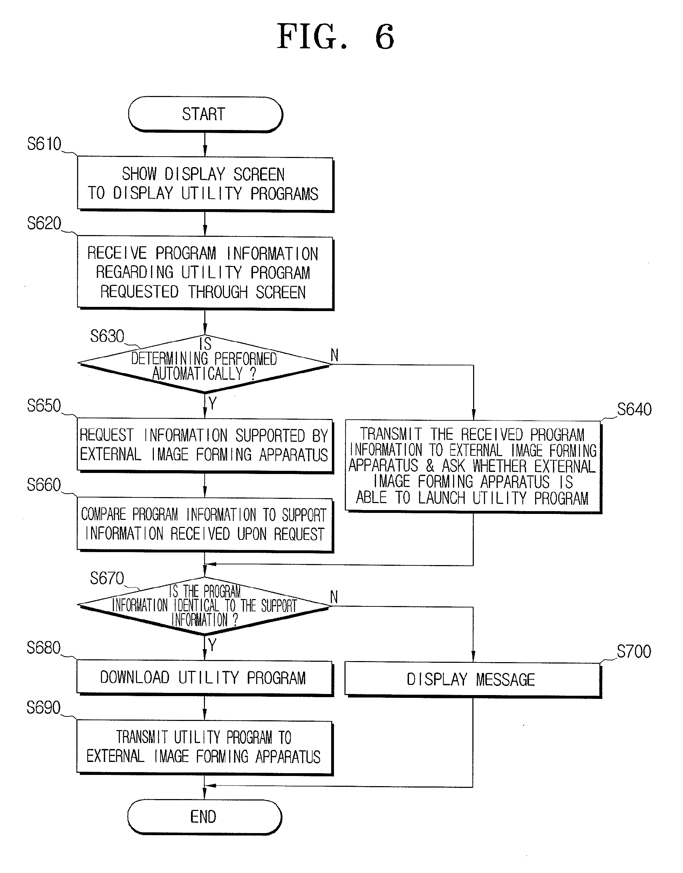

A situation in which the user wishes to install the utility program within the electronic apparatus, and a situation in which the user wishes to install the utility program in the external electronic apparatus, will be described in detail with reference to FIGS. 5 and 6.

FIG. 5 is a flowchart illustrating a method of downloading a program in the image forming apparatus 50, according to another exemplary embodiment of the present invention. Here, a description may be given with reference to FIGS. 1 and 2.

Referring to FIGS. 1, 2 and 5, if a request to download the utility program provided by the web server 10 is received from the user, the image forming apparatus 50 may receive program information regarding the requested utility program from the web server 10 in operation S510. Here, the user request may be received through the web screen provided from the image forming apparatus 50 or the external host device 30.

Next, the image forming apparatus 50 may compare the received program information to the pre-stored support information in operation S520, and may then determine whether the received program information is identical to the pre-stored support information in operation S530.

In this situation, the program information may include utility programming languages, such as XML, HTML or JavaScript; a communication protocol, such as HTTP, FTP, SOAP; or API version.

Additionally, information regarding the platform to perform operations of the image forming apparatus 50 may include information regarding a communication protocol, an API version and interpretable programming languages.

As a result of such comparing, if a determination is made that the received program information is identical to the pre-stored support information, the image forming apparatus 50 may determine that the image forming apparatus 50 is able to execute the requested utility program, and if not, the image forming apparatus 50 may determine that the image forming apparatus 50 is unable to execute the requested utility program.

In this situation, if the API version of the requested utility program is higher than the pre-stored API version information, the image forming apparatus 50 may determine that the received program information differs from the pre-stored support information.

If a determination is made that the requested utility program is executable, the image forming apparatus 50 may download the requested utility program from the web server 10, which distributes the requested utility program, in operation S540, and may then install the downloaded program in operation S550.

If a determination is made that the requested utility program is non-executable, the image forming apparatus 50 may display a notification message to provide notification that downloading the program is impossible and to provide notification of the reason thereof in operation S560.

FIG. 6 is a flowchart illustrating a method of downloading a program in the host device 30, according to another exemplary embodiment of the present invention. In FIG. 6, the host device 30 may display a display screen to display utility programs in operation S610, so that a user may request to download a desired utility program through the display screen. Here, the display screen may be a web screen provided by the web server 10.

The host device 30 may then receive the program information regarding the utility program requested through the screen from the web server 10 in operation S620, and may determine whether the external image forming apparatus 50 on which the utility program will be installed is able to launch the utility program. Such determining may be performed by the host device 30 or by the external image forming apparatus 50. If the external image forming apparatus 50 determines whether the external image forming apparatus 50 is able to launch the utility program, the host device 30 may receive the result of determining.

If the host device 30 does not perform the determining in operation S630-N, the host device 30 may transmit the received program information to the external image forming apparatus 50, and may ask whether the external image forming apparatus 50 is able to launch the utility program in operation S640. Alternatively, if the host device 30 performs the determining in operation S630-Y, the host device 30 may request the external image forming apparatus 50 to transmit the support information in operation S650. If the support information is received upon request, the host device 30 may compare the program information to the received support information in operation S660. As a result, if a determination is made that the program information is identical to the received support information, the host device 30 may determine that the external image forming apparatus 50 is able to launch the utility program.

If a determination is made that the program information is identical to the received support information in operation S670-Y, the host device 30 may download the utility program from the web server 10 in operation S680, and may transmit the downloaded program to the external image forming apparatus 50 in operation S690. Alternatively, the host device 30 may transmit the IP address for the external image forming apparatus 50 to the web server 10, and may control the web server 10 to transmit the utility program to the external image forming apparatus 50.

If a determination is made that the program information differs from the received support information in operation S670-N, that is, if a determination is made that the external image forming apparatus 50 is unable to launch the utility program, the host device 30 may display a notification message to provide notification that downloading the widget is impossible and to provide notification of a reason in operation S700.

Accordingly, checking the support information and determining whether the utility program is executable is possible, before downloading the utility program, so the user may download and install only the installable utility program.

The present invention can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

As described above, according to various embodiments of the present invention, determining whether a program, for example, a utility program, such as a widget, is executable is possible, before downloading the utility program, and to judge whether to download the utility program. Additionally, informing a user why downloading non-executable utility programs is impossible is possible. Accordingly, the user may efficiently use utility programs, and user convenience may be enhanced.

Although various embodiments of the present invention have been illustrated and described, it will be appreciated by those skilled in the art that changes may be made in these embodiments without departing from the scope of the invention as defined in the appended claims.

## Claims

1. A method for use by an electronic apparatus to download a program, the method comprising:
receiving program information regarding a program from an external apparatus;
determining whether the program is executable; and
downloading the program from the external apparatus if a determination is made that the program is executable.

2. The method of claim 1, further comprising:
transmitting the downloaded program to an image forming apparatus,
wherein the electronic apparatus is a host device, and the external apparatus is a web server, the method comprising:
determining whether the program is executable in the image forming apparatus.

3. The method of claim 2, wherein the method comprises:
requesting support information which can be supported by the image forming apparatus; and
comparing the program information and the support information received upon request, and determining that the program is executable in the image forming apparatus if the program information is identical to the support information.

4. The method of claim 2, wherein the step of downloading the program comprises:
transmitting an Internet protocol (IP) address of the image forming apparatus to the external apparatus; and
controlling the external apparatus to transmit the program to the IP address of the image forming apparatus, if a determination is made that the program is executable.

5. The method of claim 1, wherein the electronic apparatus is an image forming apparatus, wherein the method further comprises:
comparing the received program information to pre-stored support information; and
determining that the program is executable if the program information is identical to the pre-stored support information.

6. The method of any one of the preceding claims, further comprising:
displaying a notification message to provide notification that downloading the program is impossible and to provide notification of a reason thereof, if a determination is made that the program is non-executable.

7. The method of any one of the preceding claims, further comprising:
connecting to the external apparatus and displaying the same display screen as displayed on the external apparatus,
wherein the program information is information regarding the program requested through the display screen.

8. A host device connectable to an image forming apparatus, the host device comprising:
a determining unit for receiving program information regarding a program from an external apparatus, and for determining whether the utility program is executable; and
a controller for downloading the program from the external apparatus and for installing the downloaded program in the image forming apparatus if a determination is made that the program is executable.

9. The host device of claim 8, further comprising:
a storage unit for storing at least one of communication protocol information, application programming interface (API) version information and interpretable programming language information, which are supportable by the image forming apparatus,
wherein the determining unit is arranged to compare the program information to the stored information, and to determine that the utility program is executable in the image forming apparatus if the program information is identical to the stored information.

10. The host device of claim 8 or 9, further comprising:
a display unit for displaying a notification message to provide notification that downloading the program is impossible and to provide notification of a reason thereof, if a determination is made that the utility program is non-executable.

11. The host device of claim 8 or 9, further comprising:
a display unit connected to the external apparatus to show the same display screen as displayed on the external apparatus; and
a communication interface unit for receiving information regarding the program requested through the display screen from the external apparatus.

12. The host device of any one of claims 8 to 11, wherein the controller is arranged to transmit an Internet protocol (IP) address of the image forming apparatus to the external apparatus, and to control the external apparatus to transmit the program to the IP address of the image forming apparatus, if a determination is made that the program is executable.

13. An image forming apparatus, comprising:
a determining unit for receiving program information regarding a program from an external apparatus, and for determining whether the program is executable; and
a controller for downloading the utility program from the external apparatus and installing the downloaded program if a determination is made that the program is executable.

14. The image forming apparatus of claim 13, further comprising:
a storage unit for storing at least one of communication protocol information, application programming interface (API) version information and interpretable programming language information, which are supportable by the image forming apparatus,
wherein the determining unit is arranged to compares the program information to the stored information, and to determine that the program is executable in the image forming apparatus if the program information is identical to the stored information.

15. The image forming apparatus of claim 13, further comprising:
a display unit for displaying a notification message to provide notification that the downloading of the program is impossible and to provide notification of a reason thereof, if a determination is made that the program is non-executable.
